# EUROPÄISCHE PATENTANMELDUNG

(11) **EP 4 850 816 A1**
(43) Veröffentlichungstag der Anmeldung: **09.12.2026**
(21) Anmeldenummer: 25180156.9
(22) Anmeldetag: 02.06.2025
(51) Int. Cl.: B05B 11/00

(54) **FLÜSSIGKEITSSPENDER UND DRUCKSPEICHER HIERFÜR**

(71) Anmelder: Aptar Radolfzell GmbH, 78315 Radolfzell (DE)
(72) Erfinder: Greiner-Perth, Jürgen, 78244 Gottmadingen (DE)
(74) Vertreter: Witte, Weller und Partner Patentanwälte mbB Stuttgart

(57) **Zusammenfassung**

Vorgeschlagen wird primär ein Flüssigkeitsspender (10) zum Austrag von Flüssigkeiten, insbesondere zum Austrag pharmazeutischer oder kosmetischer Flüssigkeiten, mit einem Flüssigkeitsspeicher (20) zur Lagerung von Flüssigkeit vor dem Austrag und einem Austragkopf (30) mit einer Austragöffnung (32) zum Austrag von Flüssigkeit.

Der Flüssigkeitsspender (10) verfügt über mindestens eine Federeinrichtung, die entweder als Ventilfedereinrichtung eines Ventils (50, 60) ausgebildet ist und einen Ventilkörper (52, 62) des Ventils in Richtung einer Schließstellung oder Öffnungsstellung drückt und/oder die als Rückstellfedereinrichtung ausgebildet ist, die einer Förderpumpe (70) mit einer Pumpkammer (72) zugeordnet ist, wobei die Federeinrichtung (100) in Richtung einer Vergrößerung der Pumpkammer (72) wirkt.

Die Federeinrichtung (100) weist eine Mehrzahl von Federelementen (110, 112, 114, 116, 118) aus Kunststoff auf, die gemeinsam einen Federstapel (102) bilden, der zum Zwecke des Spannens der Federeinrichtung (100) verkürzt wird. Die Federelemente (110, 112, 114, 116, 118) weisen dabei vorzugsweise eine progressive Federkennlinie auf.

## Beschreibung

### ANWENDUNGSGEBIET UND STAND DER TECHNIK

Die Erfindung betrifft den Bereich der Flüssigkeitsspender, insbesondere für pharmazeutische oder kosmetische Flüssigkeiten. Solche Flüssigkeitsspender weisen häufig Federeinrichtungen auf, insbesondere Ventilfedereinrichtungen, die einen Ventilkörper in eine Endlage drücken, oder Rückstellfedern, die eine Pumpeinrichtung in einen unbetätigten Ausgangszustand zurückdrücken.

Früher kamen bei solchen Anwendungsfällen häufig metallische Federn zum Einsatz. Aufgrund der steigenden Anforderungen, Flüssigkeitsspender in Hinblick auf die Recyclingfähigkeit zu verbessern, werden heutzutage Kunststofffedern bevorzugt.

Bei Kunststofffedern ist es jedoch häufig nicht ganz einfach, Federn mit den gewünschten Merkmalen und insbesondere einer anwendungsfallspezifischen Federkennlinie herzustellen.

Aus der US 10751740 B2 ist es bekannt, eine Kunststofffeder aus einzelnen Federelementen zusammenzusetzen. Die Federelemente sind dabei als geschlitzte Doppeltellerfedern ausgebildet. Nachteilig an einem solchen Aufbau ist jedoch, dass die hier vorgeschlagenen Federelemente nicht gleichmäßig einfedern, sondern die Gefahr besteht, dass ein Federelement stärker einfedert, während ein anderes Federelement nicht oder nur in geringerem Maße einfedert. Damit einher geht ein nicht ausreichend reproduzierbares Verhalten der Gesamtfeder.

### AUFGABE UND LÖSUNG

Aufgabe der Erfindung ist es, einen Flüssigkeitsspender zur Verfügung zu stellen, der über eine Federeinrichtung verfügt, die flexibel in der Anwendbarkeit ist und ein reproduzierbares Federverhalten zeigt. Aufgabe der Erfindung ist es insbesondere, eine solche Federeinrichtung für einen Druckspeicher eines Flüssigkeitsspenders bereitzustellen.

Erfindungsgemäß werden zur Lösung dieser Aufgabe ein Flüssigkeitsspender und insbesondere ein Druckspeicher für einen Flüssigkeitsspender vorgeschlagen.

Ein erfindungsgemäßer Flüssigkeitsspender ist zum Austrag von Flüssigkeiten vorgesehen, insbesondere zum Austrag pharmazeutischer oder kosmetischer Flüssigkeiten. In gattungsüblicher Weise verfügt der Flüssigkeitsspender über einen Flüssigkeitsspeicher zur Lagerung von Flüssigkeit vor dem Austrag sowie über einen Austragkopf mit einer Austragöffnung zum Austrag der Flüssigkeit. Im Lieferzustand an den Endkunden ist der Flüssigkeitsspeicher mit einer Flüssigkeit befüllt, insbesondere mit einer pharmazeutischen Flüssigkeit, wobei dies auch Salzlösungen für nasale Applikationen umfasst, oder mit pharmazeutischen Flüssigkeiten.

Ein erfindungsgemäßer Flüssigkeitsspender verfügt über mindestens eine Federeinrichtung, deren besondere Ausgestaltung nachfolgend beschrieben ist. Diese Federeinrichtung bildet entweder eine Ventilfeder, mittels derer ein Ventilkörper eines Ventils kraftbeaufschlagt wird, insbesondere in Richtung einer Schließstellung, oder eine Pumpenfeder einer Förderpumpe, die in Richtung einer Vergrößerung einer Pumpkammer wirkt, insbesondere durch Kraftbeaufschlagung eines Pumpkolbens.

Im Falle einer Gestaltung der Federeinrichtung als Ventilfeder eines Ventils können insbesondere die folgenden Arten von Ventilen in erfindungsgemäßer Art mit einer Ventilfeder versehen sein.

Im Falle von Ventilen einer Pumpeinrichtung handelt es sich um ein insbesondere druckabhängig öffnendes Einlassventil oder Auslassventil stromaufwärts bzw. stromabwärts der Pumpkammer. Diese Ventile öffnen gegen die Kraft der Federeinrichtung jeweils dann, wenn ein Flüssigkeitsdruck stromabwärts des Ventils geringer als ein Flüssigkeitsdruck stromaufwärts des Ventils ist. Während einer insbesondere manuell bewirkten Verkleinerung der Pumpkammer öffnet das Auslassventil gegen die Kraft einer Federeinrichtung und/oder das Einlassventil wird durch eine Federeinrichtung in den geschlossenen Zustand gedrückt wird. Während eines Rückhubs nach erfolgtem Austrag schließt das Auslassventil unter Wirkung einer Federeinrichtung aufgrund von Unterdruck in der Pumpkammer und/oder das Einlassventil öffnet gegen die Kraft einer Federeinrichtung.

Im Falle einer Gestaltung der erfindungsgemäßen Federeinrichtung als Pumpenfederweist der Flüssigkeitsspender eine Pumpenkammer auf, deren Volumen variabel ist. Insbesondere kann die Pumpeinrichtung einen Pumpkolben aufweisen, der in einem Pumpenzylinder verschieblich angeordnet ist und der gegen die Kraft der Federeinrichtung verschoben werden kann, so dass das Volumen der Pumpkammer sich verringert und Flüssigkeit infolgedessen in Richtung einer Austragöffnung gefördert wird.

Eine weitere Form eines Ventils, welches mit einer erfindungsgemäßen Federeinrichtung ausgestaltet sein kann, ist ein druckabhängig gegen die Kraft einer Federeinrichtung öffnendes Auslassventil eines Flüssigkeitsspenders, bei dem durch manuelles Zusammendrücken eines Flüssigkeitsspeichers eine Druckbeaufschlagung der Flüssigkeit bewirkt wird. Insbesondere kann der Flüssigkeitsspeicher dabei als Tube oder Quetschflasche ausgebildet sein.

Eine dritte Form eines Ventils mit erfindungsgemäßer Federeinrichtung ist im Kontext der Erfindung von besonderer Bedeutung. Bei dieser Art Ventil handelt es sich um ein Auslassventil eines Flüssigkeitsspeichers, der als Druckspeicher ausgebildet ist. Das Öffnen des Ventils gegen die Kraft einer Federeinrichtung erfolgt hier durch manuelle Kraftbeaufschlagung des Ventils. Insbesondere kann ein am Druckspeicher angebrachter Austragkopf vorgesehen sein, der über einen Betätigungsabschnitt verfügt, der bei manueller Betätigung gegen die Kraft der Federeinrichtung einen Ventilkörper des Ventils aus einer Schließstellung in eine Öffnungsstellung drückt, so dass die Flüssigkeit aus dem Flüssigkeitsspeicher dann entweichen kann. Wird der Betätigungsabschnitt losgelassen, so drückt die Federeinrichtung den Ventilkörper wieder in eine Schließstellung.

Erfindungsgemäß wird vorgeschlagen, dass eine Federeinrichtung der beschriebenen Art eine Mehrzahl von Federelementen aus Kunststoff aufweist. Diese Federelemente bilden einen Federstapel, der zum Zwecke des Spannens der Federeinrichtung verkürzt wird. Entspannt die Federeinrichtung, so verlängert sich der Federstapel wieder. Unter einem Federstapel wird eine Anordnung verstanden, bei der die einzelnen Federelemente entweder direkt oder getrennt durch Abstandshalter aneinander anliegen. Die durch manuelle Kraftbeaufschlagung oder Flüssigkeitsdruck auf die Federeinrichtung wirkende Kraft wirkt gleichermaßen auf alle Federelemente und verformt diese elastisch.

Dabei ist erfindungsgemäß vorgesehen, dass die Federelemente oder zumindest einige der Federelemente eine vordefinierte, vorzugsweise nicht-lineare , insbesondere progressive Federkennlinie aufweisen. Unter einer progressiven Federkennlinie wird hier verstanden, dass der Widerstand der Federeinrichtung gegen eine Verformung mit zunehmender Verformung ansteigt. Ein um 5% elastisches verkürztes Federelement bewirkt daher eine Rückstellkraft des Federelements, die weniger als 50% der Rückstellkraft beträgt, die sich bei einer Verkürzung um 10% einstellt. Das heißt mit anderen Worten, die Federelemente oder zumindest einige der Federelemente weisen eine mit zunehmendem Federweg ansteigende Steifigkeit auf.

Die progressive Federkennlinie der Federelemente bewirkt, dass die Federelemente im Falle baugleicher Federelemente jeweils in etwa in gleichem Maße verformt werden. Während bei degressiven Federkennlinien die Gefahr besteht, dass ein Federelement stärker als andere Federelemente komprimiert wird und im schlimmsten Falle ein Federelement so stark verformt wird, dass es nicht in seinen entspannten Ausgangszustand zurückkehren kann, sorgen die progressiven Federkennlinien der Federelemente bei der erfindungsgemäßen Gestaltung für eine einheitliche Verformung und eine progressive Federkennlinie auch der Federeinrichtung als Ganzes.

Die Federelemente sind vorzugsweise als ringförmige Federelemente ausgebildet. Sie verfügen über eine Federscheibe, die vorzugsweise zentrisch mit einer Durchbrechung versehen ist. Neben dieser zentrischen Durchbrechung verfügt die Federscheibe vorzugsweise über keinerlei weiteren Durchbrechungen. Vorzugsweise sind die Federscheibe und das Federelement als Ganzes rotationssymmetrisch geformt.

Die Federscheibe ist im entspannten Zustand der Federelemente vorzugsweise eben oder konisch geformt. Es sind jedoch auch anderweitige Formgebungen möglich, beispielsweise Federelemente mit einer Federscheibe, die konzentrische Teilabschnitte mit unterschiedlicher Formgebung aufweisen, beispielsweise mit ebenen und konischen oder gewölbten konzentrischen Teilabschnitten.

Die Federelemente weisen auf gegenüberliegenden Seiten jeweils Anlagebereiche zur Anlage an anderen Federelementen oder Lagerflächen des Spenders auf. Diese Anlagebereiche werden beim Komprimieren der Federn gegeneinander verlagert, wobei ein Bereich zwischen den Anlagebereichen elastisch verformt wird und hierdurch die in die Federeinrichtung eingebrachte Energie speichert.

Bezogen auf die genannte ebene, konische oder gewölbte Formgebung der Federelemente ist vorzugsweise vorgesehen, dass beim Spannen und somit Verkürzen der Federeinrichtung als Ganzes solche Federelemente, die eine im entspannten Zustand ebene Federscheibe aufweisen, in eine konische Form gedrückt werden. Federscheiben, die bereits im entspannten Zustand eine konische oder gewölbte Form aufweisen, werden in einen konischen oder gewölbten Zustand mit verringertem Öffnungswinkel gedrückt. Insbesondere bevorzugt sind Federscheiben, die einen entspannten konischen Ausgangszustand aufweisen, in dem ein Öffnungswinkel des durch die Federscheibe gebildeten Konus einen Öffnungswinkel von 150° oder mehr aufweist, vorzugsweise von 160° oder mehr. In einer gespannten Endlage ist der Öffnungswinkel vorzugsweise um mindestens 5° kleiner, vorzugsweise um mindestens 10° kleiner. Insbesondere kann der Öffnungswinkel im maximal gespannten Zustand einen Öffnungswinkel von 130° oder weniger aufweisen.

Die Funktionsweise solcher Federelemente kann als umgekehrte Tellerfeder bzw. als Tellerfeder unter Zugspannung verstanden werden. Während bei einer üblichen Tellerfeder der Außenrand beim Zusammendrücken nach außen gedrückt wird und eine degressive Federkennlinie gegeben ist, ist bei der Federscheibe eines erfindungsgemäß genutzten Federelements das Gegenteil der Fall. Der Außendurchmesser der Federscheibe oder des Federelements als Ganzem wird tendenziell verkleinert. Hierdurch kommt es auch zu der gewünschten progressiven Federkennlinie der Federelemente.

Die Federelemente können unmittelbar aneinander anliegen. Insbesondere kann dies dann der Fall sein, wenn die Federelemente neben der genannten Federscheibe zumindest an einem die Durchbrechung umgebenden Innenrand oder an einem Außenrand einstückig mit einem Abstandshalter verbunden sind. Es kann jedoch auch einen Vorteil darstellen, wenn die Federeinrichtung neben den Federelementen selbst noch getrennte Abstandshalterelemente aufweist, vorzugsweise in Form von ringförmigen Abstandshaltern. Der Durchmesser solcher Abstandshalter ist vorzugsweise geringfügig größer als der Durchmesser des Innenrands der Federscheibe bzw. geringfügig kleiner als der Durchmesser des Außenrands der Federscheibe. Auch können Abstandshalter dieser unterschiedlichen Arten alternierend zwischen den als Federscheiben ausgebildeten Abstandshaltern angeordnet sein.

Die Trennung der Federscheiben und der Abstandshalter begünstigt insbesondere die Verformbarkeit der Federscheiben. Hierdurch lassen sich weichere Federeinrichtungen herstellen.

Umfassen die Federelemente an einem Außenradius der Federscheibe und/oder an einem Innenradius der Federscheibe einen einstückig angeformten ringförmigen Abstandshalter, bewirkt dies eine Versteifung der Federelemente, die fallweise gewünscht sein kann, durch die Verwendung separater Abstandshalter aber auch vermeidbar ist.

Die Federelemente sind aus Kunststoff gefertigt und können insbesondere mittels Spritzguss hergestellt sein. Die Federelemente und ggf. vorhandenen Abstandshalter zwischen den Federelementen können getrennte Bauteile sein, die erst in einem Feder-Aufnahmeraum des Flüssigkeitsspenders während der Montage hinzugefügt werden. Es ist aber auch denkbar, dass die Federelemente und/oder Abstandshalter miteinander im Vorfeld verbunden werden, beispielsweise kraft- oder formschlüssig verbunden werden, so dass sie als gemeinsame Einheit montiert werden.

Auch wenn die Federelemente nicht derart zu einer gemeinsamen Einheit verbunden werden, kann es zweckmäßig sein, besondere Federelemente zu verwenden, die gleichsam zwei einfachen Federelementen entsprechen. Solche besonderen Federelemente weisen mindestens zwei Federscheiben auf, die im Bereich eines Innenradius unter Bildung eines Abstandes miteinander einstückig verbunden sind.

Durch eine solche Bauweise wird der Montageaufwand reduziert, da eine verringerte Zahl von Federelementen erforderlich ist. Zudem können solche Doppel-Federelemente frei von Hinterschneidungen sein, so dass sie einfach mittels Spritzguss herstellbar sind.

Die Größe der Federelemente und der Federeinrichtung als Ganzes hängt auch vom Anwendungsfall ab. Wenn eine große Menge Energie gespeichert werden soll, so können grundsätzlich Federelemente mit größerem Durchmesser oder dickerer Federscheibe Verwendung finden.

Da allerdings der Wunsch besteht, Federeinrichtungen aus Federelementen der beschriebenen Art besonders flexibel einsetzen zu können, hat es sich als zweckmäßig herausgestellt, dass ein Außendurchmesser der Federelemente maximal 30 mm beträgt, vorzugsweise maximal 24 mm, insbesondere vorzugsweiser zwischen 14 mm und 24 mm. Eine zentrische Durchbrechung weist vorzugsweise einen Innendurchmesser zwischen 3 mm und 14 mm auf, insbesondere vorzugsweise zwischen 5 mm und 10 mm.

Ein Faktor des Außendurchmessers des Federelements bzw. der Federscheibe zum Innendurchmesser an der Durchbrechung beträgt vorzugsweise weniger als 1:6, insbesondere vorzugsweise weniger als 1:5 oder gar weniger als 1:4.

Die Dicke der Federelemente im Bereich der Federscheibe beträgt vorzugsweise zwischen 0,3 mm und 1,5 mm, je nach verwendetem Material. Eine Dicke von weniger als 0,6 mm wird insbesondere für Federelemente oder Federscheiben aus Polypropylen (PP) oder aus High-Density-Polyethylen (HDPE) vorgeschlagen. Diese Materialien im Kunststoffbereich haben einen hohen E-Modul. Insbesondere PP und PET eignen sich aufgrund seiner hohen mechanischen, chemischen und thermischen Beständigkeit als Material für die Federelemente. Wenn ein weicheres Verhalten der Federeinrichtung gewünscht ist, so werden insbesondere Low-Density-Polyethylen (LDPE) oder thermoplastische Polyolefine (TPO) als Material für die Federscheiben vorgeschlagen, insbesondere mit einer Dicke der Federscheibe zwischen 0,6 mm und 1,5 mm. Thermoplastische Polyolefine umfassend mindestens ein Elastomer und mindestens einen Anteil Polypropylen und/oder Polypropylen.

Die Materialauswahl für die Federelemente erfolgt vorzugsweise im Lichte der anderen Materialien des Austragkopfes oder des Flüssigkeitsspeichers des Flüssigkeitsspenders. Sofern diese anderen Materialien PP umfassen, werden auch die Federelemente vorzugsweise aus PP hergestellt. Bestehen der Austragkopf und/oder der Flüssigkeitsspeicher aus PE, so werden vorzugsweise PE-Federelemente verwendet. Idealerweise ist der gesamte Flüssigkeitsspeicher bzw. der ganze Flüssigkeitsspender aus Materialien gefertigt, die in einem gemeinsamen Recycling-Stream verarbeitet werden können. Besonders bevorzugt ist es, wenn der Austragkopf und/oder der Flüssigkeitsspeicher einzig aus Polyethylenterephthalat (PET) und PE oder PET und PE besteht.

Der Flüssigkeitsspender definiert vorzugsweise baulich eine maximale und eine minimale Länge des Federstapels im unbetätigten und im betätigten Zustand und damit eine maximale Verkürzung ΔL. Es hat sich als vorteilhaft herausgestellt, wenn diese maximale Verkürzung ΔL in folgendem Zusammenhang mit der Anzahl N der Federelemente und deren Außendurchmesser D steht: N x D x 0,05 < ΔL< N x D x 0,15, vorzugsweise N x D x 0,07 < ΔL < N x D x 0,13.

Die minimale Länge des Federstapels kann auch dadurch definiert sein, dass in einer Endlage mit maximaler Verkürzung alle elastisch komprimierten Federelemente jeweils auf Block mit den benachbarten Federelementen laufen.

Der Federstapel ist vorzugsweise innenseitig oder außenseitig geführt.

Im Falle einer außenseitigen Führung weist der Flüssigkeitsspender vorzugsweise einen Federraum auf, im dem der Federstapel angeordnet ist. Der Federstapel wird in diesem Falle außenseitig durch eine Zylinderwandung geführt. Vorzugsweise ist ein lichter Abstand zwischen dem Außendurchmesser des Federstapels und einem Innendurchmesser der Zylinderwandung so bemessen, dass die Federelemente bereits durch Einfügen in den Federraum in korrekte Ausrichtung relativ zueinander gelangen.

Insbesondere vorzugsweise weist die Zylinderwandung einen Innendurchmesser auf, der maximal 105% eines Außendurchmessers der Federelemente im entspannten Zustand beträgt, insbesondere vorzugsweise maximal 102% des Außendurchmessers. Da bei den erfindungsgemäßen Federelementen vorgesehen sein kann, dass ihr Außendurchmesser durch Komprimierung des Federstapels verringert wird, wird im Betrieb der Federeinrichtung und bei Kompression der Federeinrichtung nicht mehr Raum als während der Montage benötigt, insbesondere wenn die Abstandshalter als separate Abstandshalterelemente ausgebildet sind.

Im Falle einer innenseitigen Führung des Federstapels ist vorgesehen, dass die Federelemente eine zentrische Durchbrechung aufweisen, insbesondere eine zentrische Durchbrechung in der Federscheibe des Federelements. In diesem Falle weist der Flüssigkeitsspender einen Führungsstift auf, der innerhalb der Durchbrechungen der Federelemente angeordnet ist. Ein solcher Führungsstift stellt bei der Montage der Federelemente eine Erleichterung dar.

Sofern die Federeinrichtung als Ventilfeder dient, kann der Führungsstift insbesondere einstückig mit dem Ventilkörper verbunden sein, der mittels der Federelemente in eine Endlage gedrückt wird. Ist die Federeinrichtung als Rückstellfeder einer Pumpeinrichtung vorgesehen, so ist der Führungsstift vorzugsweise als rohrförmiger hohler Stift ausgebildet, der einen Fluidkanal umgibt.

Je nach Art der auszutragenden Flüssigkeit kann es einen Vorteil darstellen, wenn die Flüssigkeit mit den Federelementen nicht in Kontakt gelangt. Dies ist durch einen Fluidkanal der beschriebenen Art erzielbar.

Wie auch schon zur außenseitigen Führung beschrieben, kann das Spiel zwischen dem Führungsstift und den Federelementen recht klein ausfallen. Insbesondere, wenn die Federelemente derart gestaltet sind, dass im gespannten Zustand ein Innenrand sich tendenziell aufweitet, kann der Führungsstift einen Außendurchmesser aufweisen, der nur geringfügig kleiner ist als der Innendurchmesser der Durchbrechung im entspannten Zustand. Insbesondere kann der Führungsstift einen maximalen Außendurchmesser aufweisen, der 95% oder mehr des Innendurchmessers der Durchbrechungen der Federelemente im entspannten Zustand beträgt, vorzugsweise sogar 98% des Innendurchmessers.

Im einfachsten Falle ist vorgesehen, dass die Federelemente der Federeinrichtung baugleich zueinander sind und vorzugsweise in alternierender Ausrichtung im Federstapel angeordnet sind. Die Verwendung von Gleichteilen stellt üblicherweise einen Kostenvorteil dar. Wenn allerdings besondere Anforderungen an die Federkennlinie der Federeinrichtung gestellt werden, so kann es auch vorteilhaft sein, unterschiedliche Federelemente mit unterschiedlichen Federkennlinien zu verwenden und/oder durch Abstandshalter zu bewirken, dass die Federelemente nicht gleichzeitig, sondern nacheinander auf Block laufen.

Allerdings wird selbst für den Fall unterschiedlicher Federelemente als Teil der Federeinrichtung bevorzugt, wenn alle Federelemente aus einheitlichem Material gefertigt sind, um das Recycling zu verbessern.

Wie eingangs erläutert, ist eine Federeinrichtung der hier beschriebenen Art an verschiedenen Stellen eines Flüssigkeitsspenders verwendbar. Allerdings wird ein Anwendungsfeld als besonders wesentlich angesehen, da hier die oben beschriebenen Vorteile der Federeinrichtung große Verbesserungen bieten.

Bevorzugt ist es, dass der Flüssigkeitsspeicher als Druckspeicher zur Lagerung einer Flüssigkeit unter Überdruck ausgebildet ist, vorzugsweise als Druckspeicher aus PET und/oder vorzugsweise mit einem formflexiblen Innenbeutel zur Lagerung der Flüssigkeit. Dieser Flüssigkeitsspeicher verfügt über ein Auslassventil, welches durch eine Kraftbeaufschlagung von außen gegen die Kraft der Federeinrichtung geöffnet werden kann. Diese Kraftbeaufschlagung erfolgt üblicherweise mittels eines Austragkopfes, der am Druckspeicher befestigt ist und der über einen Betätigungsknopf verfügt, mittels dessen das in den Druckspeicher integrierte Auslassventil geöffnet wird, so dass die Flüssigkeit insbesondere in zerstäubter Form durch die Austragöffnung austreten kann.

Insbesondere bei solchen Auslassventilen hat sich die Bauweise mit einem Federstapel auf Federelementen mit progressiver Federkennlinie als vorteilhaft erwiesen.

Neben dem beschriebenen Flüssigkeitsspeicher betrifft die Erfindung auch einen solchen Druckspeicher, der zur Ankopplung eines Austragkopfes vorgesehen ist.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt eine erste Gestaltung eines erfindungsgemäßen Flüssigkeitsspenders.
Fig. 2 zeigt den Flüssigkeitsspender der Fig. 1 und dessen Druckspeicher in einer Schnittdarstellung.
Fig. 3 zeigt die Teilkomponenten eines Druckspeicherverschlusses des Druckspeichers und des integrierten Ventils mit Federeinrichtung.
Fig. 4A und 4B zeigen das Ventil des Druckspeichers im geschlossenen und geöffneten Zustand.
Fig. 5 und 6 zeigen zwei mögliche Bauweise von Federelementen der Federeinrichtung.
Fig. 7 bis 13 zeigen weitere Bauweisen der Federeinrichtung.
Fig. 14 zeigt einen zweiten Typ eines erfindungsgemäßen Flüssigkeitsspenders.
Fig. 15 zeigt einen dritten Typs eines erfindungsgemäßen Flüssigkeitsspenders.

### DETAILLIERTE BESCHREIBUNG DER AUSFÜHRUNGSBEISPIELE

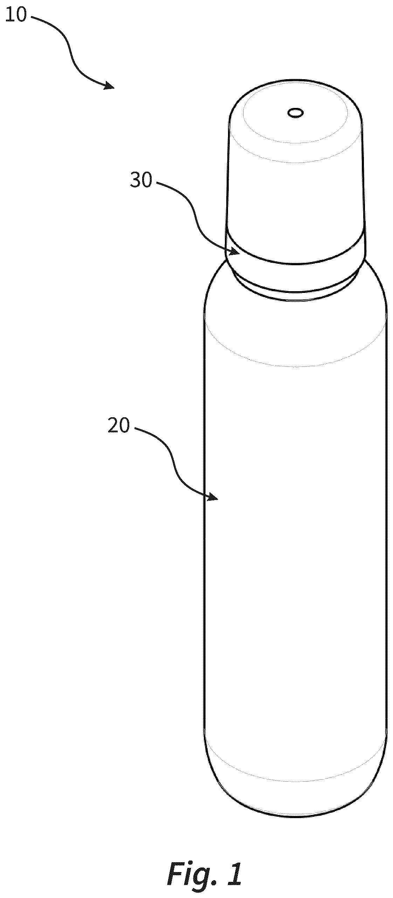

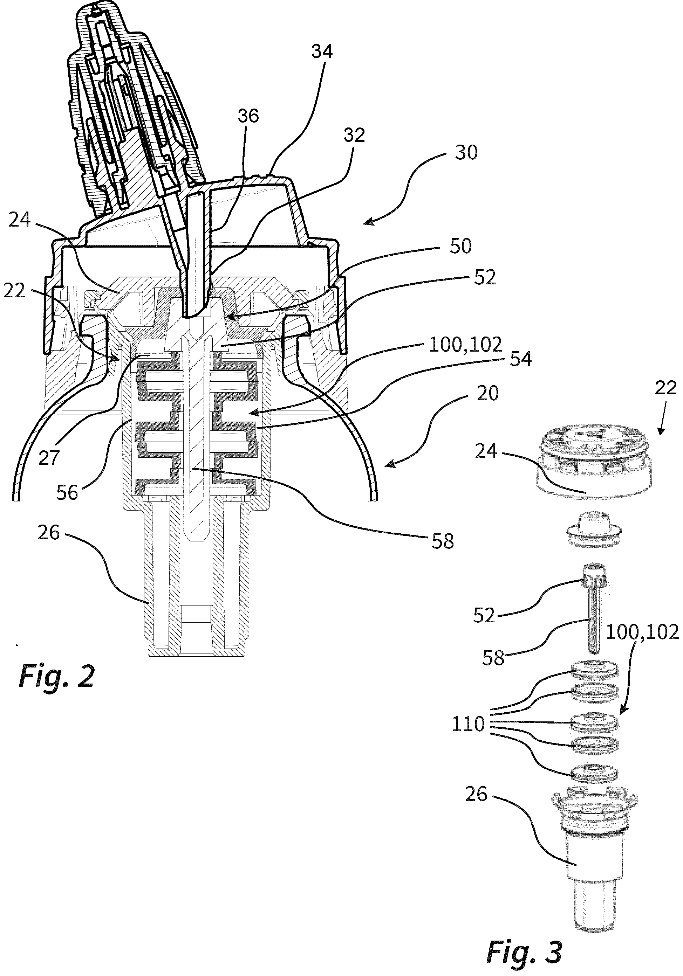

Fig. 1 zeigt eine erste Gestaltung eines erfindungsgemäßen Flüssigkeitsspenders 10. Fig 2 zeigt den Flüssigkeitsspender 10 und dessen Flüssigkeitsspeicher 20 in einer Schnittdarstellung.

Der Flüssigkeitsspender 10 der Fig. 1 bis 4B ist als Druckspeicher-Flüssigkeitsspender 10 ausgebildet. Dies bedeutet, dass sein Flüssigkeitsspeicher 20 als Druckspeicher ausgebildet ist und an einem Behälterhals über eine Verschlusseinheit 22 mit einem integrierten Ventil 50 verfügt.

Die Betätigung dieses Ventils erfolgt über einen Austragkopf 30, der am Druckspeicher 20 befestigt ist. Dieser verfügt über eine Betätigungsfläche 34, die manuell niedergedrückt werden kann, wobei diese Bewegung auch einen Einlassstutzen 36 des Austragkopfes 30 niederdrückt. Dieser Einlassstutzen ragt in die Verschlusseinheit 22 des Druckspeichers 20. Das untere Ende des Einlassstutzens 36 drückt bei Betätigung auf einen Ventilkörper 52 des Ventils 50 und lenkt dieses gegen die Kraft einer Federeinrichtung 100 hinunter.

Diese Verlagerung bewirkt, dass die unter Druck stehende Flüssigkeit, die vorzugsweise innerhalb eines Beutels im Druckspeicher 20 vorgehalten wird, am Ventilkörper 52 vorbei in den Einlassstutzen 36 einströmen kann und dann innerhalb des Austragkopfes 30 zu einer Austragöffnung 32 gefördert und von dort nach außen abgegeben wird.

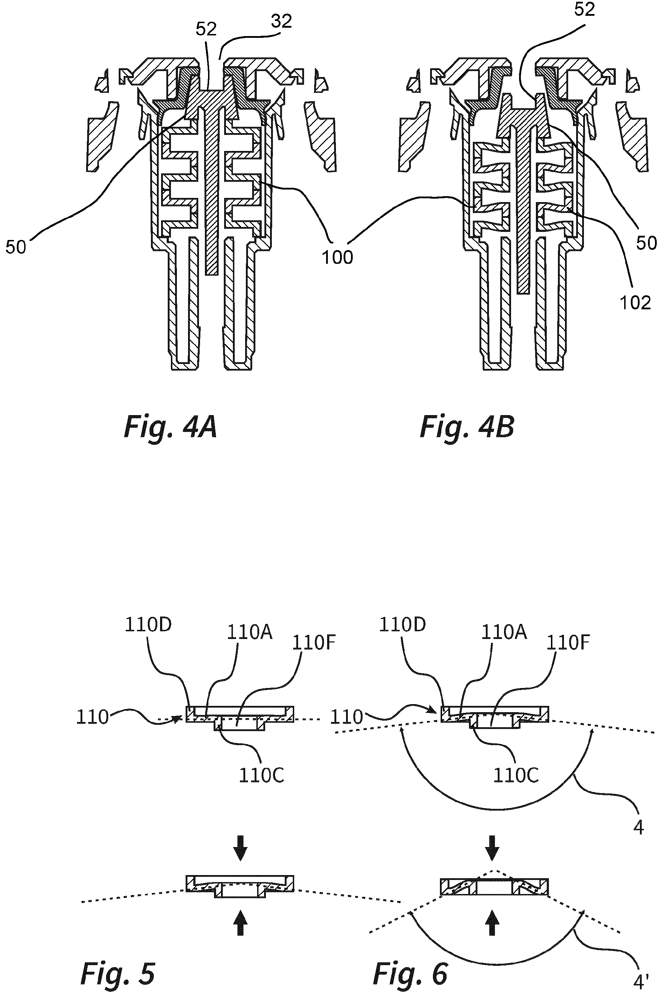

Fig. 4A und 4B verdeutlichen den geschlossenen und geöffneten Zustand des Ventils 50.

Fig. 3 zeigt die einzelnen Komponenten der Verschlusseinheit 22. Die Verschlusseinheit 22 verfügt über zwei Gehäuseabschnitte 24, 26, die gemeinsam einen Innenraum 27 begrenzen. In diesem Innenraum ist der Ventilkörper 52 vorgesehen.

Der Ventilkörper 52, an den sich ein Führungsstift 58 anschließt, wird mittels der genannten Federeinrichtung 100 in die Schließstellung gedrückt. Die Federeinrichtung 100 ist als Federstapel aus einer Mehrzahl von vorzugsweise einzelnen, separaten Federelementen 110 gebildet.

Die Fig. 5 und 6 verdeutlichen die Formgebung der Federelemente 110, wobei sich die Formgebungen dieser Federelemente 110 zwischen Fig. 5 und 6 im Detail unterscheiden. Die Fig. 5 und 6 zeigen jeweils oben den unbelasteten Zustand des Federelements 110 und unten den gespannten Zustand, verdeutlicht durch die Pfeile oberhalb und unterhalb der Federelemente 110.

Gemeinsam ist den Federelementen 110 der beiden Figuren 5 und 6, dass die Federelemente als ringförmige Federelemente 110 mit einer zentrischen runden Durchbrechung 110F ausgestaltet sind, die über eine Federscheibe 110A verfügen und innen und außen einstückig angeformte ringförmige Abstandshalter 110C, 110D aufweisen, die in entgegengesetzte Richtungen weisen.

Der Unterschied zwischen den Federelementen 110 der beiden Figuren 5 und 6 besteht darin, dass das Federelement 110 im unbelasteten Zustand eine ebene Federscheibe 110A aufweist, während die Federscheibe 110A im Falle der Gestaltung der Fig. 6 im unbelasteten Zustand eine Aufweitung ähnlich einem Konus aufweist. Im unbelasteten Zustand ist der Öffnungswinkel 4 hier etwa 160°.

Im belasteten Zustand, also in den jeweils unteren Darstellungen der Fig. 5 und 6, sind die Federscheiben jeweils verformt. Im Falle der Gestaltung der Fig. 5 ist die zuvor ebene Federscheibe 110A in eine in etwa konusförmige Form mit einem Öffnungswinkel 4' von ca. 160° gedrückt. Im Falle der Gestaltung der Fig. 6 hat sich der Öffnungswinkel 4' etwa auf 120° verringert.

In beiden Fällen der Fig. 5 und 6 ist die Verformung der Federscheibe 110A eine komplex überlagerte Biege- und Dehnungsverformung, die ein progressives Federverhalten zeigt. Dies bedeutet, dass mit zunehmender Verformung die Steifigkeit steigt.

Wie sich anhand der Fig. 2 und 4A, 4B gut ersehen lässt, ist der Federstapel 102 hier jeweils aus fünf der Federelemente 110 zusammengesetzt, die in alternierender Ausrichtung angeordnet sind. Die Federelemente liegen mit ihren inneren Abstandshaltern 110C bzw. ihren äußeren Abstandshaltern 110D aneinander an.

Wenn, wie in Fig. 4B dargestellt, der Federstapel 102 als Ganzes komprimiert wird, liegt die gleiche Kraft an allen Federelementen an. Aufgrund der progressiven Federkennlinie aller Federelemente verformen sie sich alle in im Wesentlichen gleichen Maße.

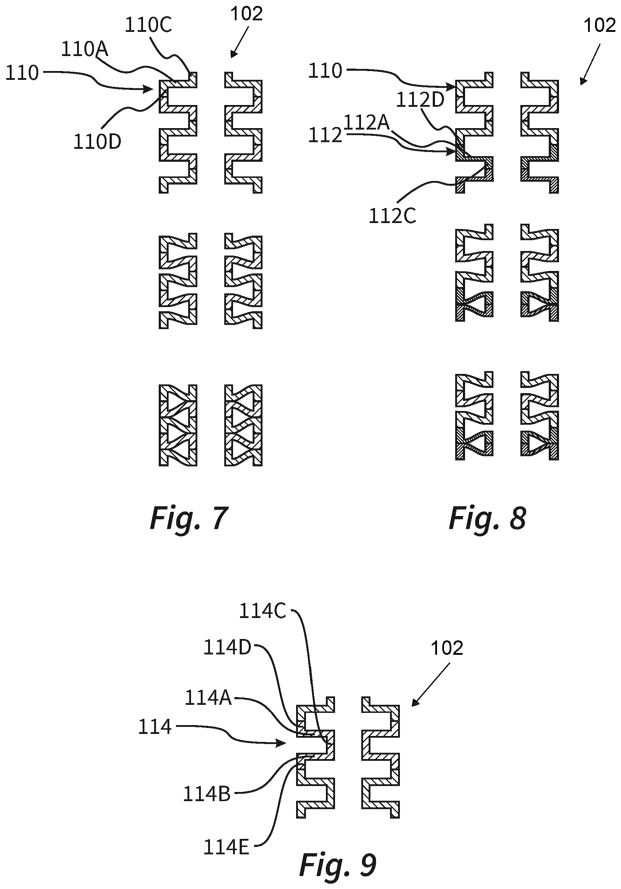

Der isolierte Federstapel 102 der Fig. 2 bis 4B ist in Fig 7 nochmals dargestellt, wobei die drei hier dargestellten Zustände von oben nach unten der nicht belastete Ausgangszustand, ein teilbelasteter Zustand und eine Endlage darstellen. In der Endlage sind die Federelemente jeweils innenseitig und außenseitig in Kontakt miteinander und eine darüber hinausgehende Kompression ist nicht möglich.

Die Fig. 8 bis 12 zeigen weitere Federstapel 102, die Federelemente 110 und/oder abgewandelte Federelemente 112, 114, 116 aufweisen und nachfolgend erläutert werden.

Bei der Gestaltung der Fig. 8 sind die Federelemente 110, 112 nicht einheitlich. Die untersten beiden Federelemente 112 unterscheiden sich von den Federelementen 110 durch eine dünnere Federscheibe 112A. Diese dünnere Federscheibe bewirkt, dass bei einer Kompression zunächst die Federscheiben 112A elastisch verformt werden, bis die Federelemente 112 eine Endlage erreicht haben, in der sie innenseitig und auch außenseitig aneinander anliegen und somit auf Block gelaufen sind. Die Federelemente 110 sind zu diesem Zeitpunkt ebenfalls bereits im Bereich ihrer Federscheiben 110A verformt, aber noch nicht auf Block gelaufen. Die von diesem Zwischenzustand ausgehende fortgesetzte Komprimierung führt dann zu einer weiteren Verformung der Federelemente 110, jedoch mit deutlich erhöhtem Kraftaufwand.

Bei der Gestaltung gemäß Fig. 9 sind besondere Federelemente 114 verwendet, die jeweils zwei Federscheiben 114A, 114B umfassen, die innenseitig mittels eines einstückig angeformten Abstandshalters 114C verbunden sind und die jeweils außenseitig über einen weiteren angeformten Abstandshalter 114D und 114E verfügen. Das Kompressionsverhalten eines Federelements 114 entspricht bei gleicher Wandungsdicke und gleichem Material in etwa dem Verhalten zweier Federelemente 110.

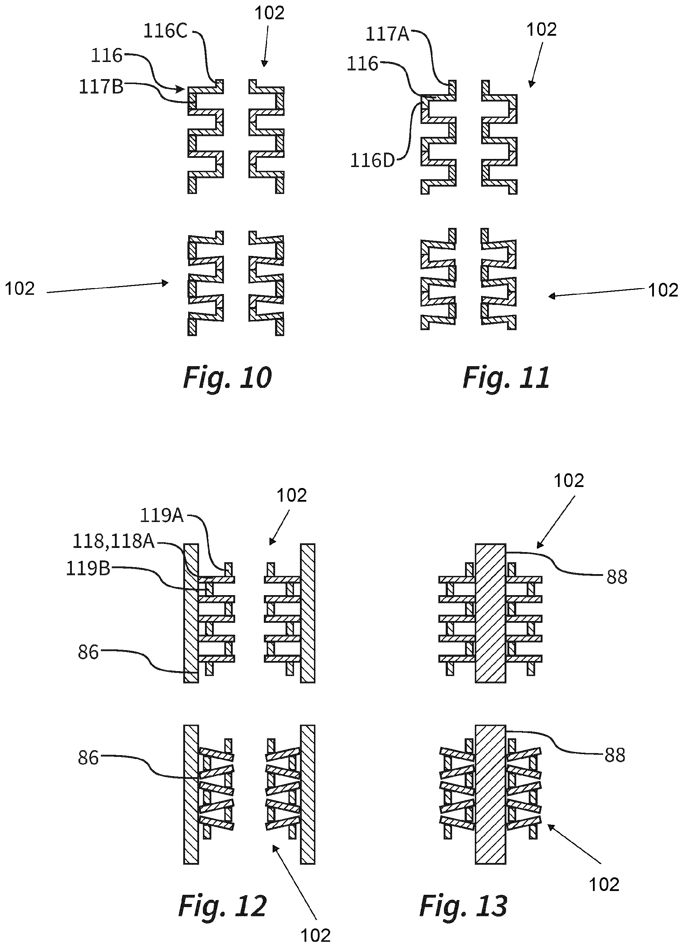

Bei den Gestaltungen der Fig. 10 und 11 finden etwas anders geartete Federelemente 116 Verwendung, bei denen nur innenseitig oder außenseitig ein angeformter Abstandshalter 116C, 116D vorgesehen ist, zusätzlich dazu jedoch auch separate Abstandshalterelemente 117A, 117B Verwendung finden.

Im Falle der Fig. 10 verfügen die Federelemente 116 über einen einstückig angeformten innenseitigen Abstandshalter 116C und der äußere Abstandshalter zwischen zwei Federelementen ist durch ein separates Abstandshalterelement 117B gebildet. Im Falle der Fig. 11 verfügen die Federelemente 116 dagegen über einen einstückig angeformten außenseitigen Abstandshalter 116D, während der innere Abstandshalter durch ein separates Abstandshalterelement 117A gebildet ist.

Die technische Wirkung bei der Verwendung separater Abstandshalterelemente 117A, 117B liegt darin, dass eine radiale Beweglichkeit zwischen dem Außenrand bzw. Innenrand der Federscheibe 116A und den Abstandshalterelementen 117A, 117B gegeben ist und dadurch die Steifigkeit der Federelemente 116 reduziert wird. Dies führt ergänzend zu dem Effekt, dass die Federscheiben 116A sich im Zuge der Komprimierung im Falle der Fig. 10 außenseitig stärker zusammenzieht und daher der Außendurchmesser in Komprimierung reduziert ist, während im Falle der Fig. 11 die Federscheibe 116A sich innenseitig stärker aufweitet als es der Fall ist, wenn hier ein Abstandshalterelement einstückig angeformt ist.

Die Gestaltung der Fig. 12 und 13 kombiniert dies insofern, als dass die Federelemente 118 hier mit den Federscheiben 118A quasi identisch sind. Die Abstandshalter 119A, 119B sind jeweils als separate Abstandshalterelemente 119A, 119B ausgebildet.

Fig. 12 und 13 zeigen auch, wie eine Federeinrichtung 100 geführt sein kann. Im Falle der Fig. 12 ist die Federeinrichtung 100 durch eine außenliegende Zylinderwandung 86 geführt. Im Falle der Fig. 13 ist die Federeinrichtung 100 durch einen innenliegenden Führungsstift 88 geführt. Das Spiel zwischen der Innenseite der Federeinrichtung 100 und der Zylinderwandung 86 bzw. dem Führungsstift 88 kann dabei minimal sein, da die Verformung der Federscheiben 118A bei Kompression eine Aufweitung an der Innenseite und eine Verjüngung an der Außenseite zur Folge haben. Dies bedeutet, dass das Spiel bei Kompression der Federeinrichtung 100 größer wird.

Die Zylinderwandung 86 und der Führungsstift 88 bilden vorteilhafte Möglichkeiten, die Montage zu erleichtern.

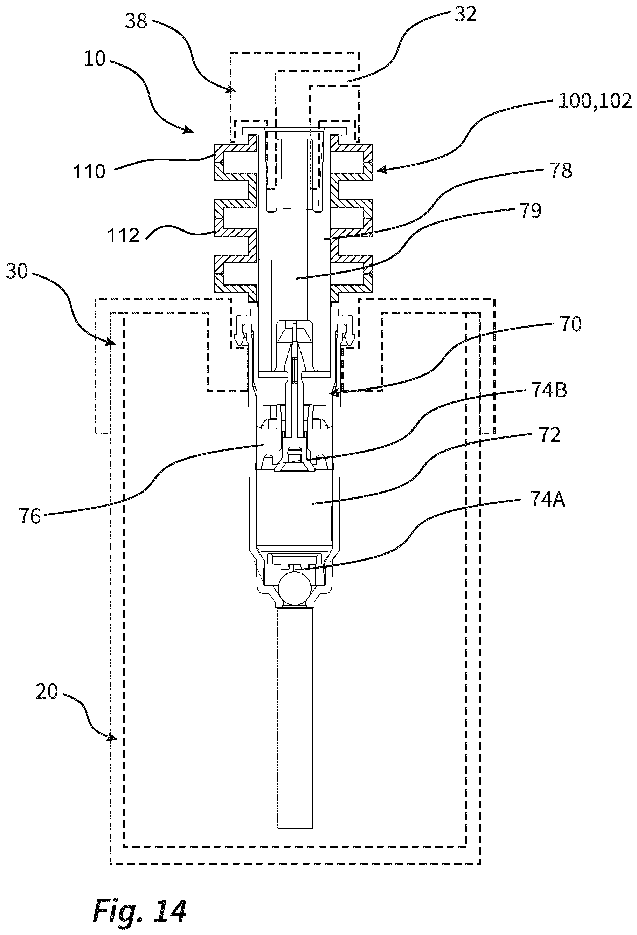

Fig. 14 zeigt einen anderweitigen Typ eines Flüssigkeitsspenders 10, der ebenfalls die erfindungsgemäße Art der Gestaltung einer Federeinrichtung nutzt. Allerdings ist der Flüssigkeitsspender 10 der Fig. 14 ein Pumpspender mit einer Pumpeinrichtung 70. Die Pumpeinrichtung verfügt über eine Pumpkammer 72, die eingangsseitig mit dem Flüssigkeitsspeicher 20 verbunden ist und die ausgangsseitig mit der Austragöffnung 32 verbunden ist. Die Pumpkammer 72 ist durch ein Einlassventil 74A und ein Auslassventil 74B begrenzt. Das Auslassventil 74B öffnet beim Niederdrücken des Betätigungsdrückers 38 und der damit einhergehenden Verkleinerung der Pumpkammer 72. Das Einlassventil öffnet im Zuge des Rückhubs, wenn die Pumpkammer 72 wieder vergrößert wird.

Eine erfindungsgemäße Federeinrichtung 100 findet bei dieser Gestaltung als Rückstellfeder Anwendung. Der aus insgesamt vier Federelementen 110, 112 gebildete Federstapel 102 ist zwischen dem Betätigungsdrücker 38 und einer Pumpenbasis angeordnet und wird beim Niederdrücken des Betätigungsdrückers 38 in der vorbeschriebenen Art komprimiert. An seiner Innenseite ist der Federstapel 102 an einem Führungsstift 78 geführt, der gleichzeitig auch das Förderrohr darstellt, mittels dessen die Flüssigkeit zur Austragöffnung 32 gelangt.

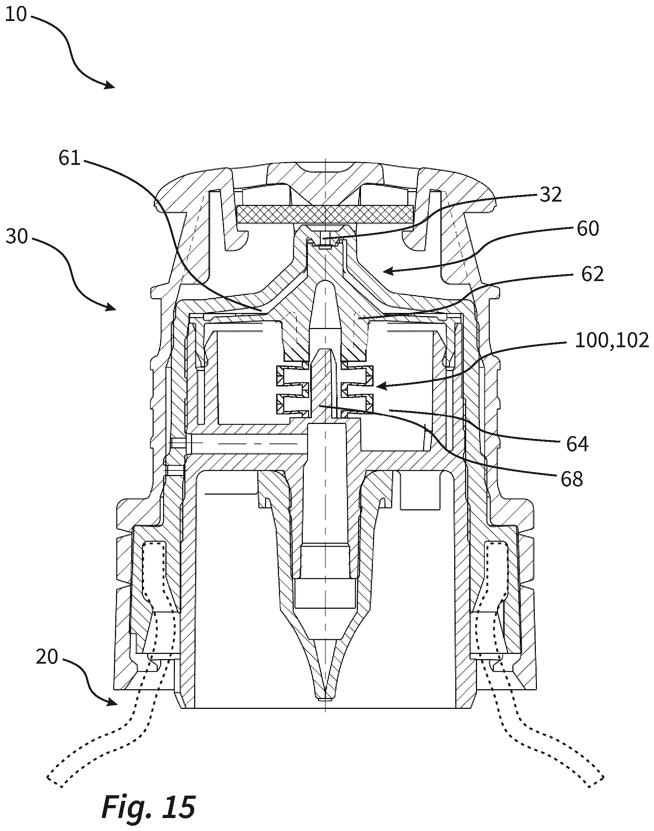

Fig. 15 zeigt einen weiteren Typ eines Flüssigkeitsspenders 10 mit einer erfindungsgemäßen Federeinrichtung 100. Die Federeinrichtung 100 ist hier wiederum als Ventilfeder eines Ventils 60 vorgesehen. Abweichend vom Ventil 50 bspw. der Fig. 2 bis 4B handelt es sich hier allerdings um ein druckabhängig öffnendes Ventil 60.

Wenn der Benutzer den Flüssigkeitsspeicher 20 zusammendrückt, so wird hierdurch ein Überdruck in der Flüssigkeit erzeugt, der sich bis in eine Ventilkammer 61 fortpflanzt. Unter der Wirkung dieses Drucks wird der umlaufend eingespannte Ventilkörper 62 und insbesondere dessen Mittelteil ausgelenkt, so dass er die Austragöffnung 32 freigibt und Flüssigkeit hier entweichen kann.

Die Federeinrichtung 100 ist einem Federraum 64 unterhalb des Ventilkörpers 62 angeordnet. Sie besteht aus insgesamt vier Federelementen 112.

## Patentansprüche

1. Flüssigkeitsspender (10) zum Austrag von Flüssigkeiten, insbesondere zum Austrag pharmazeutischer oder kosmetischer Flüssigkeiten mit den folgenden Merkmalen:
a. der Flüssigkeitsspender (10) verfügt über einen Flüssigkeitsspeicher (20) zur Lagerung von Flüssigkeit vor dem Austrag, und
b. der Flüssigkeitsspender (10) verfügt über einen Austragkopf (30) mit einer Austragöffnung (32) zum Austrag von Flüssigkeit,
**gekennzeichnet durch** die folgenden Merkmale:
c. der Flüssigkeitsspender (10) verfügt
- über mindestens ein Ventil (50, 60) mit einem Ventilkörper (52, 62) sowie eine Federeinrichtung (100), die auf den Ventilkörper (52, 62) in Richtung einer Schließstellung oder Öffnungsstellung wirkt und/oder
- über eine Förderpumpe (70) mit einer Pumpkammer (72), wobei eine Federeinrichtung (100) in Richtung einer Vergrößerung der Pumpkammer (72) wirkt,
d. die Federeinrichtung (100) weist eine Mehrzahl von Federelementen (110, 112, 114, 116, 118) aus Kunststoff auf, die gemeinsam einen Federstapel (102) bilden, der zum Zwecke des Spannens der Federeinrichtung (100) verkürzt wird, und
e. vorzugsweise die Federelemente (110, 112, 114, 116, 118) weisen eine progressive Federkennlinie auf.

2. Flüssigkeitsspender (10) nach Anspruch 1 mit den folgenden weiteren Merkmalen:
a. die Federelemente (110, 112, 114, 116, 118) sind jeweils als ringförmige Federelemente ausgebildet und verfügen über mindestens eine plane oder konische Federscheibe (110A, 112A, 114A, 114B, 116A, 118A), und
b. die Federelemente (110, 112, 114, 116, 118) sind derart angeordnet, dass bei Verkürzung der Federeinrichtung (100) die jeweilige Federscheibe (110A, 112A, 114A) aus dem planen Zustand in einen konischen Zustand verformt wird bzw. aus dem konischen Ausgangszustand in einen konischen Zustand mit verringertem Öffnungswinkel verformt wird.

3. Flüssigkeitsspender (10) nach Anspruch 1 oder 2 mit den folgenden weiteren Merkmalen:
a. die Federelemente (110, 112, 114, 116) liegen unmittelbar aneinander an, oder
b. zwischen mindestens zwei der Federelemente (116, 118) ist ein separater Abstandshalter (117A, 117B, 119A, 119B) vorgesehen, vorzugsweise in Form eines ringförmigen Abstandshalters.

4. Flüssigkeitsspender (10) nach einem der vorstehenden Ansprüche mit dem folgenden weiteren Merkmal:
a. die Federelemente (110, 112, 114, 116) weisen an einem Außenradius der Federscheibe (110A, 112A, 114A, 114B, 116A) und/oder an einem Innenradius der Federscheibe (110A, 112A, 114A, 114B, 116A) einen einstückig angeformten ringförmigen Abstandshalter (110C, 110D, 112C, 112D, 114C, 114D, 114E) auf.

5. Flüssigkeitsspender (10) nach einem der vorstehenden Ansprüche mit dem folgenden weiteren Merkmal:
a. mindestens ein Federelement (114) weist zwei Federscheiben (114A, 114B) auf, die im Bereich eines Innenradius unter Bildung eines Abstandes miteinander einstückig verbunden sind.

6. Flüssigkeitsspender (10) nach einem der vorstehenden Ansprüche mit den folgenden weiteren Merkmalen:
a. die Federelemente (110, 112, 114, 116, 118) sind ringförmig ausgebildet und weisen einen Außendurchmesser von maximal 20 mm auf, insbesondere von maximal 16 mm, und/oder
b. die Federelemente (110) weisen einen konischen Ausgangszustand auf, bei der ein Öffnungswinkel des Konus >150° beträgt, vorzugsweise >160°, und/oder
c. die Federelemente (110, 112, 114) weisen im Bereich der Federscheibe (110A, 112A, 114A) eine Dicke von 0,3 mm - 1,5 mm auf.

7. Flüssigkeitsspender (10) nach einem der vorstehenden Ansprüche mit mindestens einem der folgenden weiteren Merkmale:
a. mindestens eines der Federelemente (110, 112, 114, 116, 118) weist als Material Polyethylen auf, insbesondere HDPE, und/oder
b. mindestens eines der Federelemente (110, 112, 114, 116, 118) weist als Material Polypropylen auf, und/oder
c. mindestens eines der Federelemente (110, 112, 114, 116, 118) weist als Material ein thermoplastisches Polyolefin auf, umfassend mindestens ein Elastomer und mindestens einen Anteil Polypropylen und/oder Polypropylen.

8. Flüssigkeitsspender (10) nach einem der vorstehenden Ansprüche mit den folgenden weiteren Merkmalen:
a. der Flüssigkeitsspender (10) definiert eine maximale und eine minimale Länge des Federstapels, aus denen sich eine maximale Verkürzung (ΔL) ergibt, und
b. die maximale Verkürzung (ΔL) steht mit einem maximalen Außendurchmesser (D) der Federelemente in folgendem Zusammenhang, wobei N die Anzahl der Federelemente darstellt: $N \times D \times 0.07 < ΔL < N \times D \times 0.13 .$

9. Flüssigkeitsspender (10) nach einem der vorstehenden Ansprüche mit dem folgenden weiteren Merkmal:
a. ein Federraum (54, 64), in dem der Federstapel angeordnet ist, ist außenseitig durch eine Zylinderwandung (56) begrenzt, die den Federstapel (102) führt,
vorzugsweise mit dem folgenden zusätzlichen Merkmal:
b. die Zylinderwandung (56) weist einen Innendurchmesser auf, der maximal 105% eines maximalen Außendurchmessers der Federelemente (110, 112, 114) im entspannten Zustand beträgt, vorzugsweise maximal 102% des Außendurchmessers.

10. Flüssigkeitsspender (10) nach einem der vorstehenden Ansprüche mit den folgenden weiteren Merkmalen:
a. die Federelemente (110, 112, 114, 116, 118) weisen eine zentrische Durchbrechung (110F, 112F, 114F, 116F, 118F) auf, und
b. es ist ein Führungsstift (58, 68, 78) vorgesehen, der innerhalb der Durchbrechungen (110F, 112F, 114F, 116F, 118F) der Federelemente (110, 112, 114, 116, 118) angeordnet ist,
vorzugsweise mit mindestens einem der folgenden Merkmale:
c. die Federeinrichtung (100) ist als Ventilfedereinrichtung ausgebildet und der Führungsstift (58) ist fest und insbesondere einstückig mit dem Ventilkörper (52) verbunden, oder
d. die Federeinrichtung (100) ist als Pumpenfedereinrichtung ausgebildet und der Führungsstift (78) wird durch einen hohlen Stift gebildet, der einen Fluidkanal (79) bildet, und /oder
e. der Führungsstift (58, 68, 78) weist einen Außendurchmesser auf, der mindestens 95% eines Innendurchmessers der Durchbrechungen (110F, 112F, 114F, 116F, 118F) der Federelemente im entspannten Zustand beträgt, vorzugsweise mindestens 98% des Innendurchmessers.

11. Flüssigkeitsspender (10) nach einem der vorstehenden Ansprüche mit dem folgenden weiteren Merkmal:
a. die Federelemente (110, 112, 114, 116, 118) sind baugleich zueinander,
vorzugsweise mit dem folgenden zusätzlichen Merkmal:
b. die Federelemente (110, 112, 116) sind im Federstapel (102) in alternierender Ausrichtung ausgerichtet.

12. Flüssigkeitsspender (10) nach Anspruch 1 bis 10 mit den folgenden weiteren Merkmalen:
a. die Federelemente (110, 112) sind nicht baugleich zueinander, und
b. die Federelemente (110, 112) weisen zumindest teilweise unterschiedliche Federkoeffizienten aus,
vorzugsweise mit dem folgenden zusätzlichen Merkmal:
c. die Federelemente (110, 112) sind aus einheitlichem Material gefertigt und unterscheiden sich bezüglich ihrer Formgebung.

13. Flüssigkeitsspender (10) nach einem der vorstehenden Ansprüche mit den folgenden weiteren Merkmalen:
a. der Flüssigkeitsspeicher (20) ist als Druckspeicher (20) zur Lagerung einer Flüssigkeit unter Überdruck ausgebildet,
b. der Flüssigkeitsspeicher (20) verfügt über ein Auslassventil (50), welches durch eine Kraftbeaufschlagung von außen gegen die Kraft der Federeinrichtung (100) geöffnet werden kann.

14. Flüssigkeitsspender (10) nach einem der vorstehenden Ansprüche mit mindestens einem der folgenden zusätzlichen Merkmale:
a. die Federeinrichtung (100) steht nicht in Flüssigkeitskontakt, und/oder
b. die Federelemente (110, 112, 114, 116, 118) weisen als einzige Durchbrechung eine zentrische Durchbrechung (110F, 112F, 114F, 116F, 118F) auf, und/oder
c. der Flüssigkeitsspender ist mit einer pharmazeutischen oder kosmetischen Flüssigkeit befüllt.

15. Druckspeicher (20) zur Verwendung als Teil eines Flüssigkeitsspenders (10) nach einem der vorstehenden Ansprüche mit den folgenden weiteren Merkmalen:
a. der Druckspeicher (20) ist zur Lagerung einer Flüssigkeit unter Überdruck ausgebildet, und
b. der Druckspeicher (20) verfügt über ein Auslassventil (50) mit einem Ventilkörper (52) sowie eine Federeinrichtung (100), die auf den Ventilkörper (52) in Richtung einer Schließstellung wirkt,
**gekennzeichnet durch** die folgenden Merkmale:
c. die Federeinrichtung (100) weist eine Mehrzahl von Federelementen (110, 112, 114) aus Kunststoff auf, die gemeinsam einen Federstapel (102) bilden, der zum Zwecke des Spannens der Federeinrichtung (100) verkürzt wird, und
d. vorzugsweise die Federelemente (110, 112, 114) weisen eine progressive Federkennlinie auf.
